# EUROPÄISCHE PATENTSCHRIFT

(11) **EP 1 020 669 B1**
(45) Veröffentlichungstag und Bekanntmachung des Hinweises auf die Patenterteilung: **30.06.2004**
(21) Anmeldenummer: 99125703.1
(22) Anmeldetag: 23.12.1999
(51) Int. Cl.: F16K 17/16

(54) **Berstplatte**
Bursting disc
Disque de rupture

(30) Priorität: 14.01.1999 DE 19901160
(43) Veröffentlichungstag der Anmeldung: 19.07.2000
(73) Patentinhaber: Brilex Gesellschaft für Explosionsschutz mbH, 59929 Brilon (DE)
(72) Erfinder: Bunse, Martin, 59929 Brilon (DE)
(74) Vertreter: Grundmann, Dirk, Dr.

(56) Entgegenhaltungen:
- EP-A- 0 055 909
- EP-A- 0 456 935
- US-A- 4 079 854
- US-A- 5 368 180

## Beschreibung

Die Erfindung betrifft eine Berstplatte gemäß Gattungsbegriff des Anspruchs 1.

Eine derartige Berstplatte ist bekannt aus der europäischen Patentschrift 0 456 935, welche einen Druckentlastungs-Paneelaufbau beschreibt, in welchem eine Berstplatte zwischen zwei Halte- oder Befestigungselementen eingeschraubt ist. Die dort dargestellte Berstplatte besitzt einen gewölbten Zentralabschnitt, der von einem im Wesentlichen ebenen Randabschnitt umgeben ist. Der Randabschnitt bildet einen Flanschteil aus, mit welchem das Berstpaneel zwischen den beiden Befestigungselementen verschraubt werden kann. Der gewölbte Zentralabschnitt besitzt nahe seiner Grenze zu dem Randabschnitt eine aus vielen Einzelschlitzen bestehende Sollbruchlinie, die eine größere Unterbrechung aufweist, die als Scharnier dient, wenn die zwischen den Einzelschlitzen verbleibenden Berststege zufolge einer Druckdifferenz platzen ein Aufschwenken des Platzteiles ermöglicht. Um die Schlitze abzudichten, sind diese beidseitig mit Dichtlippen belegt, so dass je nach Druckrichtung eine der beiden Dichtlippen dichtend auf den offenen Schlitz gedrückt wird.

Weiter ist aus der europäischen Patentanmeldung 0 055 909 eine Berstplatte vorbekannt, welche ebenfalls einen gewölbten Zentralabschnitt mit umgebenden ebenen Randabschnitt aufweist. Je nach Druckrichtung und Größe der Druckdifferenz kann sich das vom gewölbten Zentralabschnitt ausgebildete Platzteil entweder umschnappend in Richtung seiner konkaven Wölbung nach innen oder in Richtung seiner konvexen Krümmung nach außen öffnen, wobei die Sollbruchlinie reißt.

Zufolge der beim Umschnappen erzeugten Beschleunigung ist der Berstdruck in dieser Richtung kleiner.

Ausgehend von dem vorbezeichneten Stand der Technik liegt der Erfindung die Aufgabe zugrunde, eine gattungsgemäße Berstplatte herstellungstechnisch zu verbessern.

Gelöst wird die Aufgabe durch die im Anspruch 1 und in den davon abhängigen Unteransprüchen angegebene Erfindung. Es wird darauf abgestellt, dass die beiden Randabschnitte lediglich bereichs- insbesondere punktweise miteinander verbunden sind und ein sich zum Zentrum hin offener Spalt zwischen den Randabschnitten beim Einbau der Berstplatte zumindest bereichsweise derart schließt, dass der Stützkragen einen Druck auf eine vom Stützkragen getragene Dichtung in Richtung auf die Sollbruchlinie ausübt. Es ist von Vorteil, dass sowohl Berstplatte als auch Stützring jeweils aus einem Rohling gefertigt werden, welche formgleich gestaltet sind. Diese Ausgestaltung bringt den Vorteil, dass bei einem Bersten in Richtung zur konvexen Seite der Wölbung lediglich die Haltekräfte der Sollbruchlinie überwunden werden müssen. Bei einer Druckdifferenz zur konkaven Seite hin wird dagegen der Randbereich der Berstplatte vom Stützkragen unterstützt. Die radiale Länge des Stützkragens, also dessen Breite definiert demzufolge den Grenzdruck, der notwendig ist, um das gewölbte Platzteil umschlagen zu lassen. Dies ist insbesondere eine Folge des in die Wölbung hineinragenden freien Randes des Stützkragens. Zur Anwendung kommen derartige Berstplatten insbesondere bei Förderanlagen für Stäube, Sägemehl oder dergleichen. Dabei werden die Berstplatten mit ihrer Wölbung nach außen in die Wände der Fördereinrichtungen integriert, so dass bei einer Grenzdrucküberschreitung, bspw. durch eine Explosion in der Förderanlage die Berstplatten zur Druckentlastung öffnen. Derartige Förderanlagen arbeiten zumeist mit einer einen Unterdruck erzeugenden Saugvorrichtung. Wenn gleichzeitig alle Saugöffnungen der Förderanlage verschlossen werden, können in der Förderanlage erhebliche Unterdrücke auftreten, die zu einer Implosion führen können. Um dies zu verhindern, soll die Berstplatte auch nach innen öffnen können. Um unabhängig vom Öffnungsdruck nach außen den Innenöffnungsdruck bei der Herstellung vorbestimmen zu können, erweist sich der dem Randabschnitt des Stützringes angeformte Stützkragen, der die Sollbruchlinie übergreift und in den Wölbungsinnenraum ragend der Wölbungskontur des Zentralabschnittes des Platzteiles folgt, als vorteilhaft. Die Breite dieses Stützkragens kann unabhängig von den Befestigungsmitteln der Berstplatte frei gewählt werden und definiert den Berstdruck nach innen. Eine bevorzugte Weiterbildung der Erfindung sieht vor, daß die zusammen ein Flanschteil ausbildenden Randabschnitte von Berstplatte einerseits und Stützring andererseits gleichgestaltet sind mit übereinanderliegenden Grenzen zu den jeweils abgekrümmten Abschnitten. Die Sollbruchlinie besteht bevorzugt aus einer Vielzahl von durch Berststege unterbrochene Einzelbruchlinien, die auch als Schlitze ausgebildet sein können, wobei die Sollbruchlinie einen längeren unterbrochenen Bereich ausbildet, der als Scharnier wirkt. Sind die Einzelbruchlinien als offene Schlitze gestaltet, so werden diese Schlitze bevorzugt nur einseitig von einer Dichtung abgedichtet. Diese Dichtung kann aus Gummi bestehen. Sie liegt zwischen dem die Schlitze ausbildenden Bereich des Zentralabschnittes und dem Stützkragen. Es erweist sich als Vorteil, wenn die Berstplatte und der Stützring so ausgebildet sind, daß sich zwischen den beiden aufeinanderliegenden Randabschnitten ein keilförmiger Spalt ausbildet, der nach innen hin offen ist. Werden bei dieser Ausgestaltung die beiden Randabschnitte durch die Befestigungselemente aufeinandergedrückt, so wird die zwischen Stützkragen und Zentralabschnitt liegende Gummidichtung gegen die offenen Schlitze gedrückt, so daß eine beidseitige Abdichtung erfolgt. Als besonderer fertigungstechnischer Vorteil wird angesehen, daß die Berstplatte und der Stützring aus gelichgestalteten Rohlingen gefertigt werden können. Hierzu wird aus einem ebenen Metallblech zunächst durch Tiefziehen oder dergleichen ein gewölbter Zentralabschnitt ausgebildet. Zur Fertigung der Berstplatte wird ein derartig geformter Rohling sodann mit den die Sollbruchlinie ausbildenden Schlitzen versehen. Zur Ausbildung eines Stützringes wird bei einem derartig ausgestalteten Rohling der mittlere Abschnitt der Wölbung herausgeschnitten, so daß nur der Stützkragen bestehen bleibt. Je nach vorbestimmtem Berstdruck nach außen wird eine besondere Stegweite gewählt. Der Berstdruck nach innen wird durch eine entsprechende Stützkragenbreite gewählt.

Ein Ausführungsbeispiel der Erfindung wird nachfolgend anhand beigefügter Zeichnungen erläutert. Es zeigen:
- Fig. 1: eine perspektivische Darstellung einer erfindungsgemäßen Berstplatte in Form einer Kreisscheibe,
- Fig. 2: eine Seitenansicht in Explosionsdarstellung der Einzelteile,
- Fig. 3: eine Draufsicht,
- Fig. 4: einen Schnitt gemäß der Linie IV-IV in Fig. 3 und
- Fig. 5: eine Darstellung der Einzelkomponenten gemäß Fig. 4 im unverbundenen Zustand.

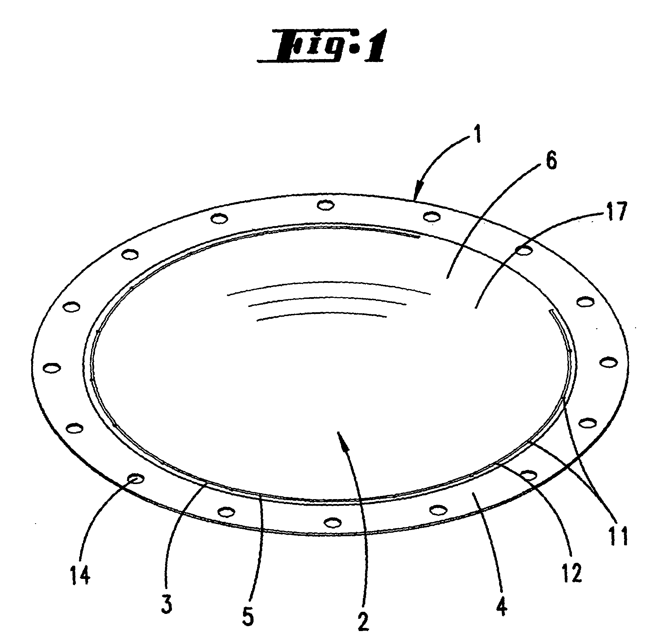

Die Berstplatte des Ausführungsbeispieles wird insgesamt mit der Bezugsziffer 1 bezeichnet. Im Ausführungsbeispiel ist die Berstplatte kreisrund dargestellt. Es sind jedoch auch andere Formen vorgesehen, bspw. ist auch die Rechteckform bevorzugt. Der äußere Bereich bildet einen Randabschnitt 4 aus, der bspw. in der Form, wie es die EP 0 456 935 beschreibt, in besondere Halteeinrichtungen eingeschraubt werden kann. Hierzu dienen die Schraubendurchtrittsöffnungen 14. An den im wesentlichen ebenen Randabschnitt 4 ist ein gewölbter Zentralabschnitt 2 angeformt. Im Ausführungsbeispiel bildet sich zwischen Randabschnitt 4 und Zentralabschnitt 2 eine scharfe Grenze 3 in Form eines Knicks aus, die dadurch entsteht, daß der Rohling für die Berstplatte 1 mittels Vakuum über eine entsprechende Ringkante tiefgezogen wird.

Im grenznahen Bereich befindet sich eine Sollbruchlinie 5, die aus einer Vielzahl von Schlitzen 12 besteht, die zwischen sich Berststege 11 belassen. Ein längerer schlitzfreier Abschnitt 17 bildet ein Scharnier aus.

Aus einem Formrohling, der in der gleichen Weise und in der gleichen Gestalt gefertigt wird, wird ein Stützring 7 gefertigt, in dem der gewölbte Zentralabschnitt unter Belassen eines Stützkragens 9 aus dem Rohling herausgeschnitten wird. Sodann wird der Stützring 7 mit seinem Randabschnitt 8 unter die Berstplatte 1 gelegt und die beiden übereinaderliegenden Randabschnitte 4, 8 mittels Punktschweißverbindungen 15 im äußeren Randbereich miteinander verbunden. Vorher wird auf den äußeren Bereich des abgewinkelten Stützkragens 9 ein Dichtstreifen 13 aus Gummi aufgebracht, der die Schlitze 12 wölbungsinnenseitig abdeckt.

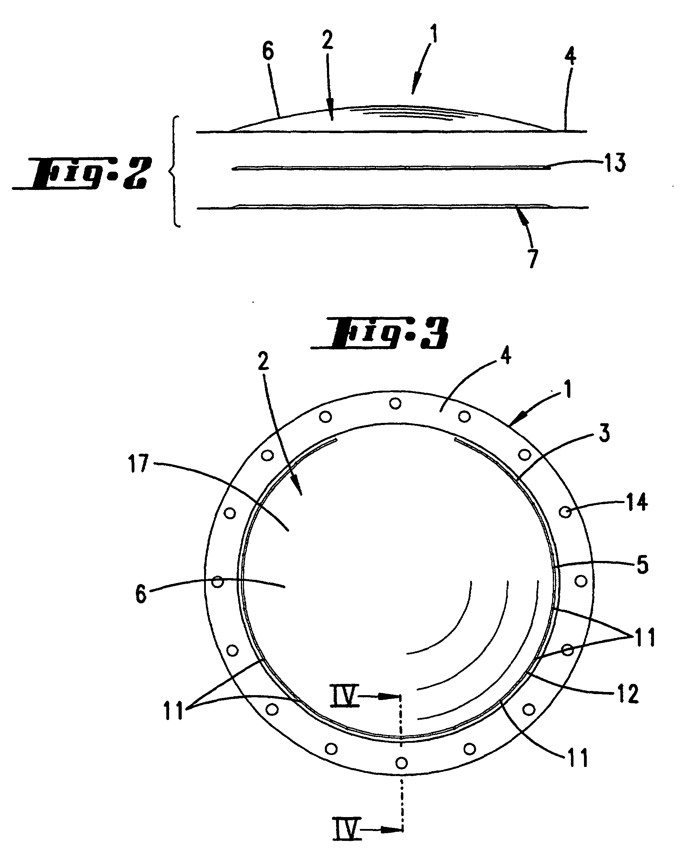

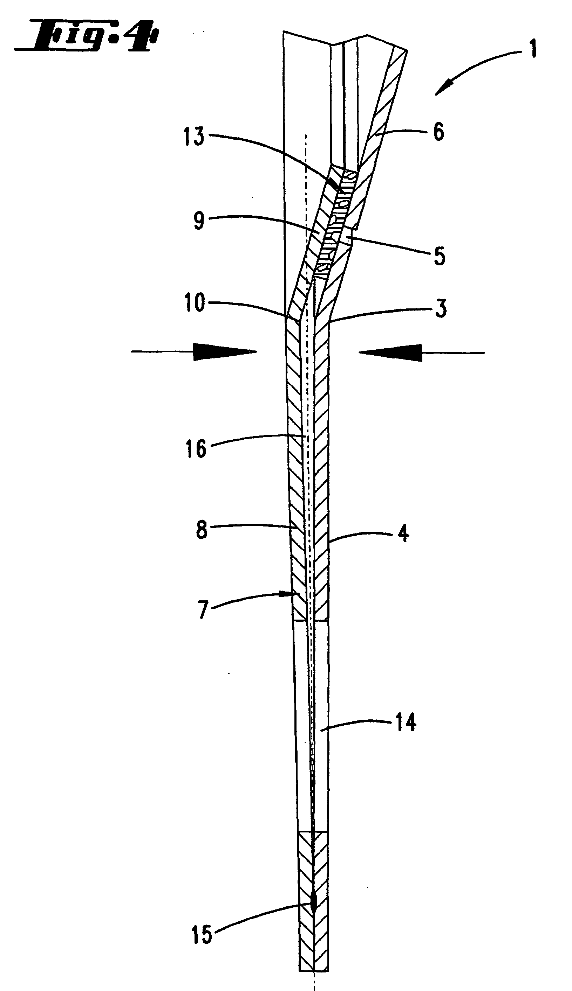

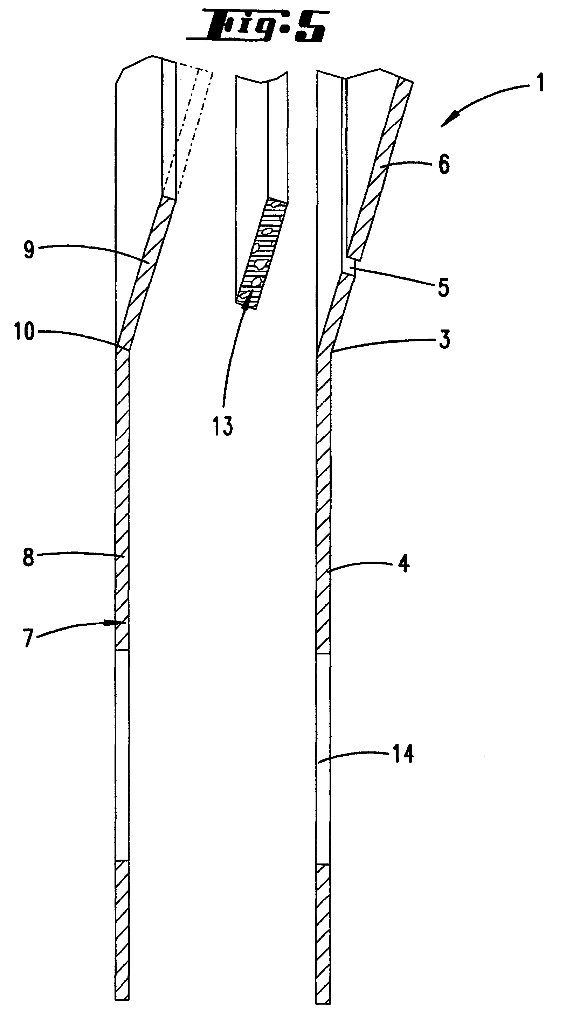

Da die Querschnittsformen (vgl. Fig. 5) von Berstplatte 1 und Stützring 7 im Bereich ihrer Randabschnitte 4 und 8, ihrer Grenzen 3, 10 zum gewölbten Zentralabschnitt und die Winkel der sich an die Grenzen 3, 10 anschließenden Zentralabschnitte identisch sind, bildet sich zufolge der Dicke der Dichtstreifen 13 nach der Punktschweißverbindung 15 ein nach innen hin offener Keilspalt 16 aus (vgl. Fig. 4).

Wird nun, wie in der EP 0 456 935 oder der EP 0 055 909 dargestellt, die Berstplatte zwischen zwei Befestigungselementen verschraubt, so wirken auf den Spalt 16 Kräfte in Richtung der in Fig. 4 dargestellten Pfeile. Dies hat zur Folge, daß bei der Montage der Dichtstreifen 13 gegen den Schlitz 12 gedrückt wird und ihn dichtend verschließt.

Die Berstplatte gemäß der Erfindung zeichnet sich insbesondere durch eine hohe Vakuumstabilität aus. Es kann sogar vorgesehen sein, daß auch der Stützkragen mit Schlitzen versehen ist, wie der gewölbte Zentralbereich der Berstplatte, so daß über diese zusätzlichen Schlitze der Berstdruck zur konkaven Seite hin einstellbar ist.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Eine in Form eines von einem im Wesentlichen ebenen Randabschnitt umgebenen gewölbten Zentralabschnittes ausgebildete Berstplatte (1), wobei der Zentralabschnitt (2) nahe seiner Grenze (3) zu dem der Befestigung der Berstplatte bestimmten Randabschnitt (4) mit einer Sollbruchlinie (5) versehen ist, die ein bei einer vorbestimmten Druckdifferenz öffnendes Platzteil (6) definiert, wobei die Berstplatte (1) auf ihrer konkaven Seite von einem Stützring (7) unterlegt ist, der einen zum Randabschnitt (4) der Berstplatte korrespondierenden Randabschnitt (8) aufweist, an welchen ein die Sollbruchlinie (5) übergreifender und der Wölbungskontur des Zentralabschnittes (2) folgender Stützkragen (9) angeformt ist, **dadurch gekennzeichnet, dass** die beiden Randabschnitte (4,8) lediglich bereichs-, insbesondere punktweise miteinander verbunden sind und ein sich zum Zentrum hin offener Spalt (16) zwischen den Randabschnitten (4, 8) beim Einbau der Berstplatte zumindest bereichsweise derart schließt, dass der Stützkragen (9) einen Druck auf eine vom Stützkragen (9) getragene Dichtung (13) in Richtung auf die Sollbruchlinie (5) ausübt.

2. Berstplatte nach Anspruch 1, **dadurch gekennzeichnet, dass** die zusammen ein Flanschteil ausbildenden Randabschnitte (4, 8) gleichgestaltet sind mit kongruenten Grenzen (3,10) zum Zentralabschnitt (2) bzw. Stützkragen (9).

3. Berstplatte nach einem der vorhergehenden Ansprüche, **dadurch gekennzeichnet, dass** die Sollbruchlinie (5) aus einer Vielzahl von durch Berststege (11) unterbrochene Einzelbruchlinien (12) besteht.

4. Berstplatte nach Anspruch 3, **dadurch gekennzeichnet, dass** die Einzelbruchlinien (12) als offene Schlitze gestaltet sind, die von der Dichtung (13) abgedichtet sind.

5. Berstplatte nach einem der vorhergehenden Ansprüche, **dadurch gekennzeichnet, dass** die Berstplatte (1) und der Stützring (7) aus gleichgestalteten Rohlingsformen gefertigt sind.

## Claims

1. A bursting plate (1) in the form of a domed central section enclosed by a substantially planar peripheral section, it being the case that the central section (2) is provided, in the vicinity of its boundary (3) with the peripheral section (4), which is intended for securing the bursting plate, with a predetermined breaking line (5) which defines a rupture part (6) which opens in the case of a predetermined pressure difference, and that positioned beneath the bursting plate (1), on its concave side, is a supporting ring (7) which has a peripheral section (8) which corresponds to the peripheral section (4) of the bursting plate and on which is integrally formed a supporting collar (9), which grips over the predetermined breaking line (5) and follows the contour of curvature of the central section (2), **characterized in that** the two peripheral sections (4, 8) are connected to one another merely in certain regions, in particular at certain points, and, when the bursting plate is installed, a gap (16) between the peripheral sections (4, 8), the gap being open in the direction of the centre, closes, at least in certain regions, such that the supporting collar (9) subjects a seal (13) which is borne by the supporting collar (9) to pressure in the direction of the predetermined breaking line (5).

2. Bursting plate according to Claim 1, **characterized in that** the peripheral sections (4, 8), which together form a flange part, are of identical configuration with congruent boundaries (3, 10) with the central section (2) and supporting collar (9), respectively.

3. Bursting plate according to one of the preceding claims, **characterized in that** the predetermined breaking line (5) comprises a multiplicity of individual breaking lines (12) interrupted by bursting crosspieces (11).

4. Bursting plate according to Claim 3, **characterized in that** the individual breaking lines (12) are configured as open slits which are sealed by the seal (13).

5. Bursting plate according to one of the preceding claims, **characterized in that** the bursting plate (1) and the supporting ring (7) are produced from identically configured blanks.

## Revendications

1. Une plaque d'éclatement (1) réalisée sous la forme d'une partie centrale bombée entourée d'une partie de bordure sensiblement plate, dans laquelle la partie centrale (2) à proximité de sa frontière (3) vers la partie de bordure (4) déterminée par la fixation de la plaque d'éclatement, est munie d'une ligne (5) de rupture préférentielle qui définit une pièce en place (6) s'ouvrant pour une différence de pression prédéterminée, la plaque d'éclatement (1) étant supportée sur sa face concave par une bague d'appui (7) qui comporte une partie de bord (8) correspondant à la partie de bord (4) de la plaque d'éclatement et sur laquelle est formée une collerette d'appui (9) recouvrant la ligne (5) de rupture préférentielle et suivant le contour de bombement de la partie centrale (2), **caractérisée en ce que** les deux parties de bord (4, 8) sont reliées l'une à l'autre uniquement par zones, en particulier par points, et obturent un intervalle (16) ouvert vers le centre entre les parties de bord (4, 8) au montage de la plaque d'éclatement au moins par zone, de sorte que la collerette d'appui (9) exerce, dans la direction de la ligne (5) de rupture préférentielle, une pression sur une étanchéité (13) portée par la collerette d'appui (9).

2. Plaque d'éclatement selon la revendication 1, **caractérisée en ce que** les parties de bord (4, 8) formant ensemble une partie de flasque présentent la même configuration avec des frontières congruentes (3, 10) à la partie centrale (2) où respectivement à la collerette d'appui (9).

3. Plaque d'éclatement selon l'une des revendications précédentes, **caractérisée en ce que** la ligne de rupture préférentielle (5) se compose de plusieurs lignes individuelles de rupture (12) interrompues par des barrettes d'éclatement (11).

4. Plaque d'éclatement selon la revendication 3, **caractérisée en ce que** les lignes individuelles de rupture (12) sont réalisées comme des rainures ouvertes qui sont rendues étanches par l'étanchéité (13).

5. Plaque d'éclatement selon l'une des revendications précédentes, **caractérisée en ce que** la plaque d'éclatement (1) et la bague d'appui (7) sont réalisées à partir de formes ou matrices d'ébauche présentant la même configuration.
